# EUROPEAN PATENT SPECIFICATION

(11) **EP 3 360 300 B1**
(45) Date of publication and mention of the grant of the patent: **29.06.2022**
(21) Application number: 15777917.4
(22) Date of filing: 05.10.2015
(51) Int. Cl.: H04L 65/1016, H04L 65/1063, H04L 65/1096, H04L 67/306

(54) **METHOD FOR DETERMINING WHETHER TO APPLY A MEDIA SPECIFIC ACTION**
VERFAHREN ZUR BESTIMMUNG, OB EINE MEDIENSPEZIFISCHE AKTION ANZUWENDEN IST
PROCÉDÉ DE DÉTERMINATION D'APPLICATION D'UNE ACTION SPÉCIFIQUE DE CONTENU MULTIMÉDIA

(43) Date of publication of application: 15.08.2018
(73) Proprietor: Telefonaktiebolaget LM Ericsson (PUBL), 164 83 Stockholm (SE)
(72) Inventor: AXELL, Jörgen, 182 39 Danderyd (SE); SEDLACEK, Ivo, 250 64 Hovorcovice (CZ)
(74) Representative: Ericsson
(86) International application number: PCT/EP2015/072944
(87) International publication number: WO 2017/059886

(56) References cited:
- US-A1- 2009 150 562
- US-A1- 2013 147 902
- US-A1- 2015 052 422
- "3rd Generation Partnership Project; Technical Specification Group Core Network and Terminals; Extensible Markup Language (XML) Configuration Access Protocol (XCAP) over the Ut interface for Manipulating Supplementary Services (Release 13)", 3GPP STANDARD; 3GPP TS 24.623, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V13.0.0, 26 June 2015 (2015-06-26), pages 1-21, XP050966037, [retrieved on 2015-06-26]
- GARCIA-MARTIN NOKIA M: "Input 3rd-Generation Partnership Project (3GPP) Release 5 Requirements on the Session Initiation Protocol (SIP); rfc4083.txt", INPUT 3RD-GENERATION PARTNERSHIP PROJECT (3GPP) RELEASE 5 REQUIREMENTS ON THE SESSION INITIATION PROTOCOL (SIP)?; RFC4083.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 May 2005 (2005-05-01), XP015041916,

## Description

### Technical field

The invention relates to a method for determining whether to apply a media specific action.

### Background

The application of media specific actions to communications is an important aspect of the Internet Protocol Multimedia Subsystem. Particular actions applied comprise the routing of calls in call forwarding or diversion. A common requirement is that communications of a particular media type are diverted whilst others are not, or that communications of different media type have different rules applied.

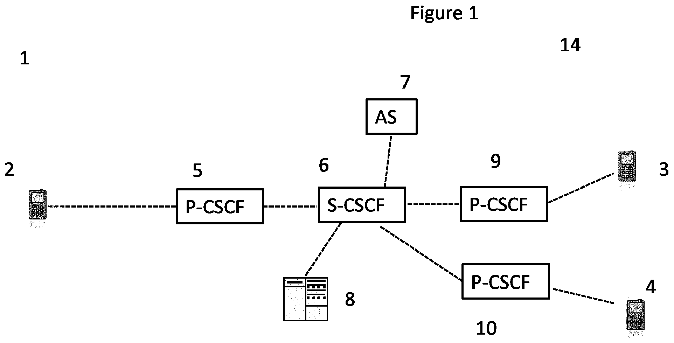

Figure 1 is a schematic diagram of an IMS (1) according to the prior art, showing the components involved in a communication diversion. Figure 1 show three user equipments, UE, the first (2) originating the call, the second (3) the intended recipient and the third (4) the destination to which the communication is diverted. The signalling for the communication on set-up is sent to the Proxy Call Session Control Function (P-CSCF) (5) associated with the first user equipment. The signalling is sent to the Serving Call Session Control Function (S-CSCF) (6) associated with the second user, which communicates with an application server (7) and a Home Subscriber server (HSS) (8). In an IMS the decisions on applying rules such as diverting communications are typically performed at application servers. The remaining components are the P-CSCF (9) associated with the second user equipment (3) and the P-CSCF (10) associated with the third user equipment (4).

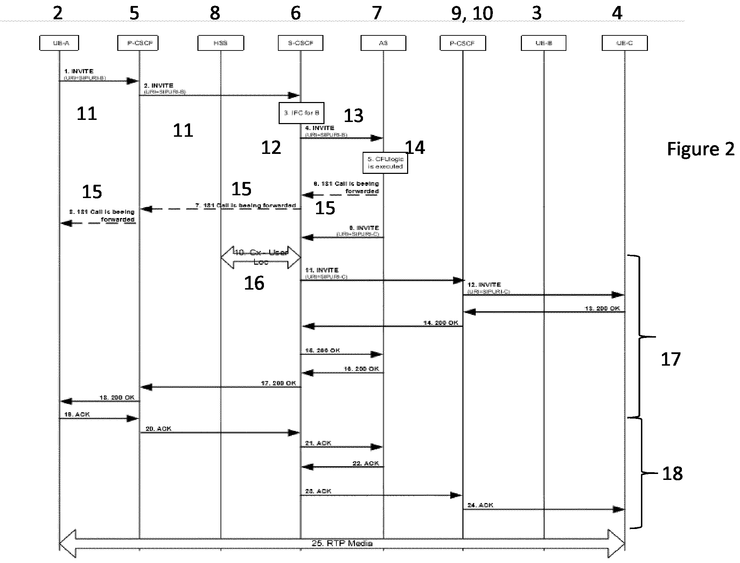

Figure 2 is a signalling diagram showing the signalling involved in a communication diversion. The set-up of the communication begins with a Session Initiation Protocol (SIP) INVITE message (11) sent from the first user equipment (3) to the P-CSCF (5) and forwarded to the S-CSCF (6), where the Initial Filter Criteria (12) for the communication are implemented. An INVITE message (13) is sent to the application server (7), which processes (14) the rules associated with the type of call and the user equipment. The fact that the communication is being forwarded may be signalled back to the first user equipment (15). Relevant information (16) is taken from the HSS. This is then followed by a series (17) of standard SIP messages to establish the communication between the first (2) and third user (4) equipments and to acknowledge set-up (18).

The SIP message which begins the establishment of a communication typically comprises a Session Description Protocol, SDP, text. Within the SDP text there is typically one or more lines of code indicating the media type. Typically, an Extended Mark-up Language (XML) Configuration Access Protocol, XCAP, specified in IETF RFC 4825 (3GPP TS 24.623) is used in order to allow the user to configure the service settings. A file associated with the subscriber's service settings is typically stored at the HSS and can be fetched by the application server when the user registers. Application Server specific databases may also be used. This file contains the rules to be applied to communications from the subscriber. A sequence of rules is possible, each rule having a condition part and an action part. The action part of the rule is executed when the condition part is evaluated as true. After a condition is evaluated as true, no further rules are checked. If the condition part is evaluated as false, then the next rule is checked. On arrival of the SIP message, this file is executed and appropriate actions are applied to the communication. This method is defined in the 3GPP standard 24.604. According to TS24.604, "when the incoming call requests for certain media, the forwarding rule can decide to forward the call for this specific media. This condition evaluates to true when the value of this condition matches the media field in one of the "m=" lines in the SDP (IETF RFC 4566) offered in an initial INVITE request (IETF RFC 3261)." The "m=" lines are the code in the SDP specifying the media present in the communication. A video telephony communication has both video and audio, and so a condition specifying audio only would be evaluated as true for video telephony, potentially resulting in an incorrect application of an action. In order to overcome this possibility, an additional restriction is imposed on the ordering of rules, with the rule for video telephony session of a supplementary service preceding the rule that is applicable for voice sessions.

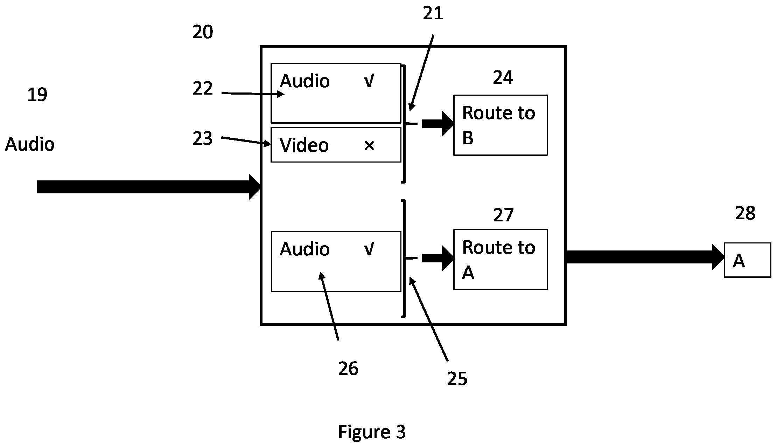

Figure 3 is a diagram illustrating the normal operation of a media specific rule at an application server. In this example, the subscriber has requested that voice communications are diverted to destination A and video telephony communications, comprising both audio and video, are diverted to destination B. Figure 3 illustrates the processing of a protocol message for an audio communication. A protocol message (19) indicating an audio only communication arrives at the application server and the rules (20) are applied. The first rule (21) has a condition requiring the presence of both audio (22) and video (23), before the route to B action (24) is implemented. The absence of an indication of video in the protocol message means that the condition is evaluated as false. The action (24) is not implemented and so the next rule (25) is checked. The second rule has a condition that an indication of audio must be present. In this instance, this condition is evaluated as true and so the action (27) "route to A" is implemented. This results in an instruction (28) for the communication to be diverted to A.

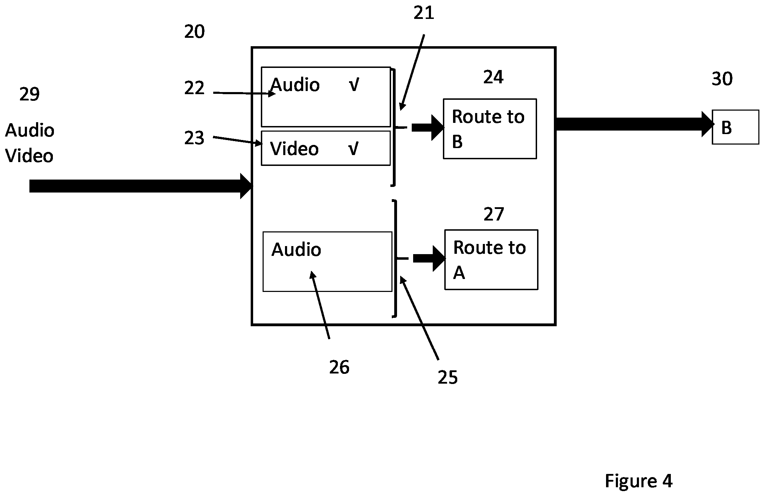

Figure 4 is a diagram illustrating the same rules in operation, but with a protocol message (29) indicating that the communication with which it is associated has both audio and video. Here, when the first rule (21) is checked, the condition is evaluated as true and hence the action (24) "route to B" is implemented. The evaluation of rules now stops as one has been implemented. Table 1 shows typical coding for the rules illustrated schematically in Figures 3 and 4.

### <communication-diversion>

**Table 1**

| |
|---|
| ```
 <ruleset>
    <rule id="vt">
          <conditions>
               <busy>
               <media>video</media>
               <media>audio</media>
          </conditions>
          <actions>
               <target>A</target>
          </actions>
    </rule>
    <rule id="voice">
          <conditions>
               <busy>
               <media>audio</media>
          </conditions>
          <actions>
               <target>B</target>
          </actions>
    </rule>
    </ruleset>
    </communication-diversion>
``` |

A problem arises however when a user wishes to change the supplementary service configuration to allow incoming video calls to be delivered to the UE, but to continue to divert voice communications to destination A. In other words, the video telephony communication forwarding is deactivated.

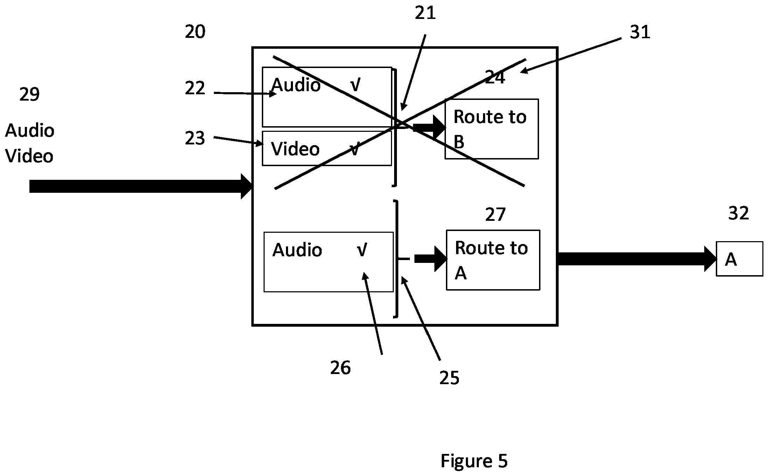

Figure 5 is a diagram showing the effect of this deactivation. The first rule is deactivated (31), causing it to be evaluated a false. This results in the checking of the second rule (25) in response to the protocol message (29) indicating audio and video. The condition for the second rule is evaluated as true and the rule is executed, resulting in a diversion of the video telephony communication to A (32). Typical coding for rules after the deactivation of the video telephony diversion is shown in table 2. The <ruledeactivatedline> causes the condition for the rule to be evaluated to false.

### <communication-diversion>

**Table 2**

| |
|---|
| ```
 <ruleset>
    <rule id="vt">
          <conditions>
               <busy/>
               <media>video</media>
               <media>audio</media>
               <ruledeactivated/>
          </conditions>
          <actions>
               <target>A</target>
          </actions>
    </rule>
    <rule id="voice">
          <conditions>
               <busy/>
               <media>audio</media>
          </conditions>
``` |
| ```
             <actions>
                  <target>B</target>
             </actions>
        </rule>
   </ruleset>
   </communication-diversion>
``` |

US2015/0052422 describes a method and apparatus for controlling the presentation of user changeable IMS service rules at a user equipment. Specifically, the user is provided with an indication as to whether or not a given rule can be changed by the user.

US2009/0150562 describes an apparatus and method for directing a SIP communication to a network entity according to a device-direction policy.

### Summary

The invention is defined by the independent claims. Further embodiments of the invention are defined by the dependent claims. Although the invention is only defined by the claims, the below embodiments, examples and aspects are only present for the sole purpose in aiding in understanding the background and advantages of the invention.

Accordingly, in a first aspect of the present invention there is provided a method of determining whether to apply a media specific action to communications in an Internet Protocol Multimedia Subsystem enabled network, the method comprising, at an application server receiving an instruction comprising a rule, configured using the Extended Mark-up Language (XML) Configuration Access Protocol, XCAP, and wherein the rule comprises a media specific action and conditions for implementing the media specific action. The conditions comprise a first condition specifying a set of one or more media types and a second condition specifying that no media types other than the types in the set are present. The method further comprises, on receipt of a protocol message setting up or modifying a communication, determining if the protocol message meets the first condition and the second condition and only if both the first condition and the second condition are met, applying the media specific action to the communication.

In an embodiment, the media specific action is a routing instruction for the communication.

In an embodiment, the protocol message is for a text based protocol.

In an embodiment, the protocol message uses the Session Description Protocol.

In a second aspect of the present invention, there is provided an apparatus for use in at an intermediate node of an Internet Protocol Multimedia Subsystem, IMS, enabled network, the apparatus comprising: processor circuitry; a storage unit storing instructions executable by said processor circuitry, a transmitter and a receiver. The apparatus is operative to receive an instruction comprising a rule, configured using the Extended Mark-up Language (XML) Configuration Access Protocol, XCAP, and wherein the rule comprises a media specific action and conditions for implementing the media specific action, wherein the conditions comprise a first condition specifying the presence of a set of one or more media types and a second condition specifying that no media types other than the types in the set are present. The apparatus is further operative, on receipt of a protocol message setting up or modifying a communication, to determine if the protocol message meets the first condition and the second condition and only if both the first condition and the second condition are met, apply the media specific action to the communication.

According to a third aspect of the present invention, there is provided a computer program, comprising instructions which, when executed on at least one processor, cause the at least one processor to carry out a method according to the first aspect.

According to a fourth aspect of the present invention there is provided a computer program product comprising a computer program according to the third aspect.

According to a fifth aspect of the present invention there is provided a carrier containing the computer program according to the fourth aspect, wherein the carrier optionally includes an electrical signal, an optical signal, a radio signal, a magnetic tape or disk, an optical disk or a memory stick.

### Brief Description Of The Drawings

Figure 1 is a schematic diagram of the IMS architecture according to the prior art;
Figure 2 is a schematic diagram of the process of call forwarding according to the prior art;
Figure 3 is a diagram illustrating the operation of media specific rules according to the prior art;
Figure 4 is a diagram illustrating the operation of media specific rules according to the prior art;
Figure 5 is a diagram illustrating a problem with the operation of media specific rules according to the prior art;
Figure 6 is a flow chart of the steps of a method according to an embodiment;
Figure 7 is a diagram illustrating the operation of media specific rules according to an embodiment;
Figure 8 is a diagram illustrating the operation of media specific rules according to an embodiment;
Figure 9 is a diagram illustrating the operation of media specific rules according to an embodiment; and
Figure 10 is a schematic diagram of an apparatus for use in an application server according to an embodiment.

### Detailed description

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art.

The following definitions are used in this disclosure. The term "user equipment" is used to refer to any mobile device that may be used to connect to a wireless access network. It includes for example mobile telephony handsets, tablets, computers and vehicles configured with cellular network capability. The term "instruction" refers to a set of rules comprising conditions and rules for implementing media specific actions. Each rule has a condition and an action. If the condition part is evaluated as true, then the action is implemented. If the condition part is evaluated as false, then the action part is not implemented. Where there is more than one condition for implementing an action, the conditions are referred to as the first condition, second condition etc.. In such instances, where clarification is needed, reference is made to the "overall condition", which is the combined result of evaluating each of the conditions, such that the overall condition is true if each of the first condition, second condition etc. are true and the overall condition is false if any of the fist condition, second condition etc. are false. References to executing the rule mean the implementing of the action of the rule. "Communication" refers to any user communication session or call, including voice calls, video telephony calls, data transfer, image transfer, messages, including instant messaging and SMS texts. The term "protocol message" refers to messages used to set up or control a communication.

The present disclosure primarily discusses IMS enabled networks in which communications comprising either audio or audio and video may be diverted by the implementation of service configuration rules by an application server. The service configuration rules allow the diversion or forwarding of a communication to a different user equipment or other network terminal in the event for example of the target user equipment of the communication being busy or not answering. However, the invention is not limited to audio and video or just to call diversion. The person skilled in the art will appreciate that other media types, such as image, text or message, may be used. Likewise, although the media specific actions typically comprise diversion or call forwarding instructions, the person skilled in the art will appreciate that other actions may be applied, for example call barring. The invention is not limited to any one type of media specific action.

In order to enable media specific actions to be applied, an instruction comprising the appropriate rules is provided at an application server. The instruction can be a service configuration for a subscriber. This is typically configured using XCAP. In an embodiment the service configuration comprises XML. Typically the service configuration is stored in the HSS and downloaded to the application server on request. The person skilled in the art will appreciate that other implementations are possible and the invention is not limited to any one method of providing an instruction comprising media specific rules.

The present invention seeks to overcome the problem of the prior art in which incorrect application of actions may occur after the deactivation of a rule. Essentially, the aim is to ensure, when there is no extant rule for a particular set of media types, the set does not unintentionally follow the rules intended for a subset of those media types, for example, a video telephony communication with audio and video, unintentionally following a rule intended for audio only.

The obvious solution to the problem is to provide a rule with an "empty action" to replace the deactivated rule. This type of rule is illustrated in table 3 below In the code in table 3, there is no target specified in the action part of the rule. An alternative would be to specify the destination user equipment as the target.

### <conditions>

**Table 3**

| |
|---|
| ```
               <busy/>
               <media>video</media>
               <media>audio</media>
               <conditions>
                                <actions><target></target>
         </actions>
``` |

This approach would provide a new rule for video telephony communications. The new rule would, like the deactivated rule, be placed before the rule for audio only communications and so would be checked first. The condition would be evaluated as true and hence no further rules are checked. The null action would be implemented resulting in no diversion of the communication.

There are however a number of drawbacks with this approach. There are two options for deactivating rules. The first is the method discussed above, in which an indication of deactivation is inserted into the rule. The rule is kept, including its target for re-direction. This allows the rule to be easily reactivated. It is a useful method for example in diversion of calls to voicemail. The second method is erasure of the rule or the target, in which the rule is completely deleted. This is useful if multiple numbers are used for diversion, some or all of which may be temporary options. The use of an empty target necessitates the erasure of the rule, as the rule is replaced with the new rule specifying no target. This would remove the option of reactivation of the original rule.

A further problem lies in the difference in operation of a diverted communication compared with a communication put straight through to the originally intended destination. In particular this relates to the implementation of other supplementary services such as privacy, presentation etc. Upon diversion, the application server adopts the originating supplementary services of the originally intended destination (second user equipment (3) in Figures 1 and 2). When a call is put straight through without diversion, the terminating supplementary services of the initiating user equipment (first user equipment (2) in Figures 1 and 2) is used.

In order to overcome these problems, there is provided a new condition for use in instructions comprising media specific rules. This condition requires the absence of further media. This will be referred to as the "no more media" condition. This may be incorporated into the rules for applying media specific actions to communications. In an embodiment, any rule which applies to a first set of media types where the first set is a subset of a second set, a condition requiring the absence of any other media is required. So for example, a first set of media consists of media-type A and media-type B, and a second set consists of media-type A, media-type B and media-type C. The first set is a subset of the second and so the "no more media" condition is inserted into the overall condition applying to the first set. This ensures that a condition intended only for the first set evaluates as false when applied to the second set. In the example above, of the two communication types, voice telephony and video telephony, the set of media types for voice telephony (audio) is a subset of the set of media types for video telephony (audio and video). The rule for voice communication diversion must therefore have the "no more media" condition. The presence of the "no more media" condition means that the overall condition will evaluate as false for the video telephony communication.

The introduction of the "no more media" condition allows the problem of incorrect application of media specific actions after rule deactivation to be overcome. It also allows the use of both deactivation and erasure of rules, and the correct supplementary service options may be implemented. The "no more media" mechanism has the further advantage that no changes are needed to the rule deactivation methods presently in operation and in the standards, hence ensuring backwards compatibility.

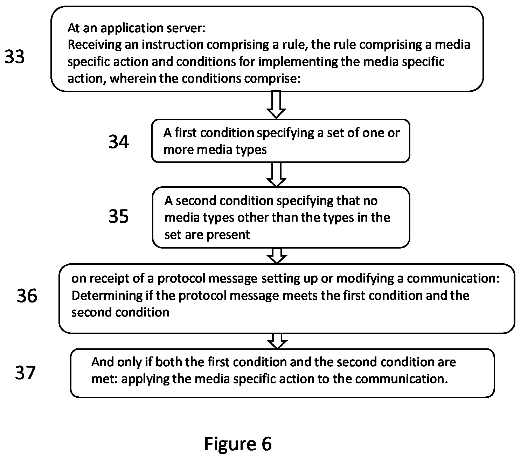

Figure 6 is a flow chart of the process, according to an embodiment, of determining whether an action should be applied. The first step comprises at an application server, receiving (33) an instruction comprising a rule, wherein the rule comprises a media specific action and conditions for implementing the media specific action to a communication. In an embodiment, the instruction is received from the HSS after a request from the application server. In another embodiment, the instruction is received from the user equipment and stored in an application server specific database. The person skilled in the art will appreciate that there are other options and the invention is not limited to any one method of providing the application server with the instruction. In an embodiment the instruction is written in Extended Mark-up language XML and is configured by means of XCAP. However the skilled person will appreciate that other text based protocols may be used and the invention is not limited to any one language or means of configuring the instruction. The instruction comprises at least two conditions. The first condition specifies (34) that a set of one or more media types and the second condition specifies (35) that no other media types may be present. On receipt (36) of a protocol message setting up or modifying a communication, the method determines whether both conditions have been met. The media specific action is applied (37) only if both the first condition and the second condition are met. In an embodiment the protocol type is a SIP message containing SDP text. However, the person skilled in the art will appreciate that alternative protocols are possible and the invention is not limited to any one protocol type for the protocol message. In an embodiment, the media specific action is a division or other routing instruction. However, other actions may be applied and the invention is not limited to any one type of media specific action.

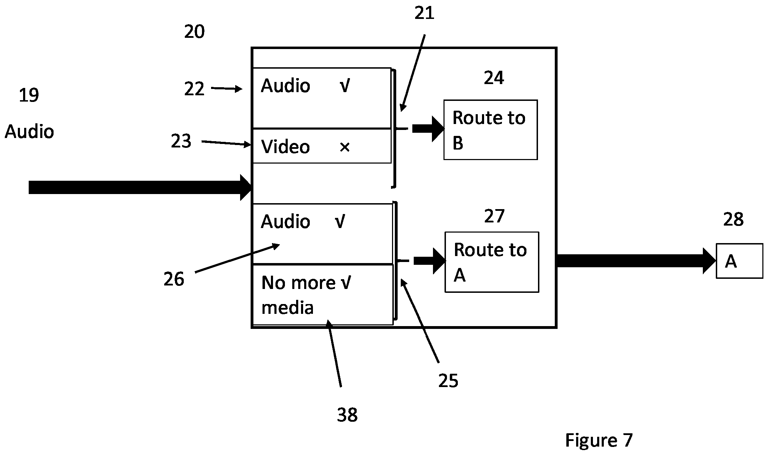

Referring back the example given in the background section, where it was desired to route voice calls and video telephony differently, the rule for voice telephony would now contain a "no more media" condition. In an embodiment corresponding to this example, the instruction received at the application server, typically an XCAP instruction comprising a service configuration, comprises a rule for application to an audio communication. The rule will comprise an action, which in an embodiment, is a call diversion and two conditions. The first condition comprises a requirement that the communication must comprise audio. The second condition is that the communication contains no other media. When a protocol message for a communication arrives at the application server, the rules are evaluated. In an embodiment, the protocol message is a SIP INVITE message. If the protocol message is for a voice communication, then both the first condition (audio present) and the second condition (no other media) are met and hence the overall condition for the rule is evaluated as true. The action associated with the rule is then applied. If a protocol message for a video telephony communication arrives at the application server, then the first condition is evaluated as true, but not the second, since there is an additional medium, video. The overall condition for the rule is evaluated as false and hence the action is not applied. The person skilled in the art will appreciate that the specific features of this embodiment, such as the type of protocol for the instruction, the type of protocol message, the specific media types and the rules to be applied are independent of each other and may be applied separately or in any combination. The operation of this embodiment is illustrated in Figures 7, 8 and 9.

Figure 7 is a diagram illustrating the solution to the problem according to an embodiment. Figure 7 illustrates the operation of the method before a deactivation of a rule. As before, a protocol message for an audio only communication arrives (19) and the rules are applied (20). The first rule (1) is applied, and since there is no video (22) present, the overall condition is evaluated as false. The second rule (25) is therefore checked. As before, the audio condition is present. However, here, a further "no further media" condition (38) is also present. The audio communication has no further media and so this condition is evaluated as true. The communication is therefore forwarded to A (28).

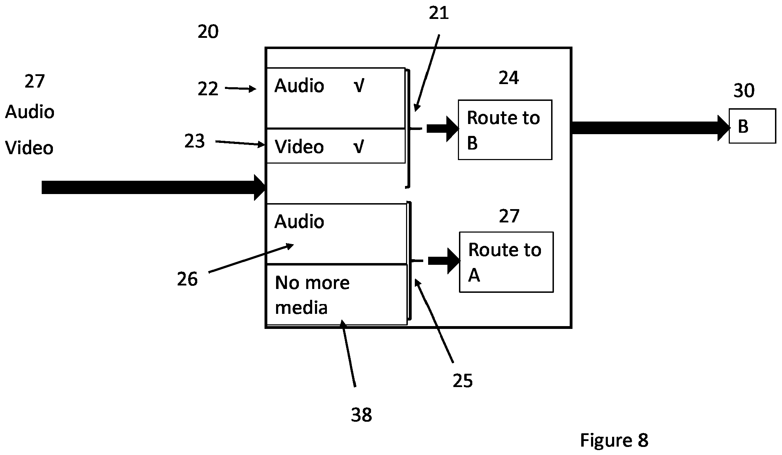

Figure 8 is a diagram illustrating how the solution according to the embodiment of Figure 7 works for a video telephony communication comprising two media types, audio and video. A protocol message arrives (29) for the video telephony communication. The rules are applied (20). The communication comprises audio (22) and video (23), so the overall condition is evaluated as true. the action is applied and the video communication is forwarded to B (30).

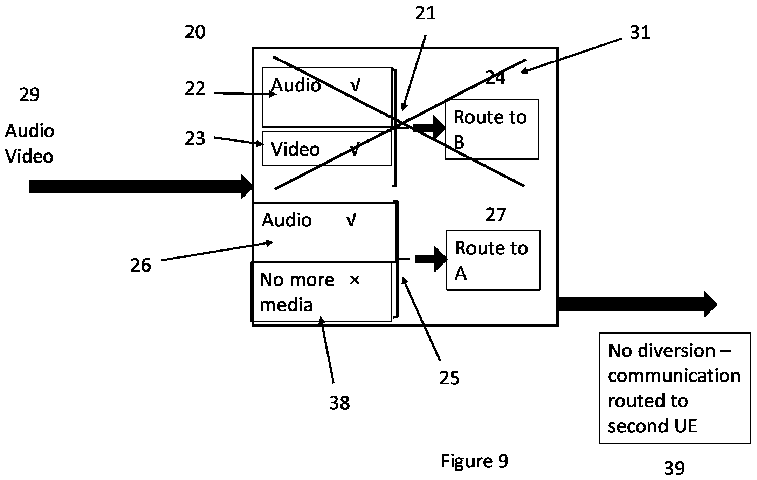

Figure 9 is a diagram illustrating the operation of the method after the deactivation of the video forwarding rule (31). A protocol message arrives (29) for the video telephony communication. The rules are applied (20). The communication comprises audio (26) and hence the first condition is true. However, there is a further media and hence the no more media condition (38) is evaluated as false. The overall condition is evaluated as false and hence the forwarding to A does not occur. There are no more rules to be checked and so no diversion takes place. The communication is routed to the second user equipment, the originally intended destination (39). Typical coding for the embodiment of Figures 7 to 9 is illustrated in Table 4.

**Table 4**

| |
|---|
| ```
 <cp:rule id="audiotelephony">
 <cp:conditions>
 <ss:media>audio</ss:media>
 <noMoreMedia/>
 </cp:conditions>
 <cp:actions>
 <forward-to>
  <target>tel:+15556667777</target>
  <notify-caller>true</notify-caller>
 </forward-to>
 </cp:actions>
 </cp:rule>
``` |

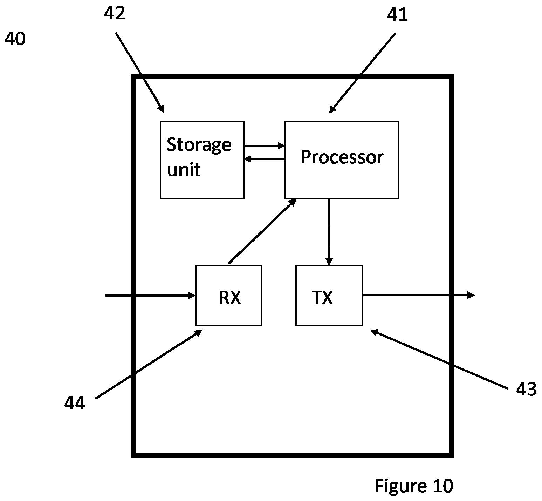

Figure 10 is a schematic diagram of an apparatus (40) according to an embodiment, for use in application server in a cellular network and comprises processor circuitry (41), a storage unit (42) storing instructions executable by the processor circuitry, a transmitter (43) and a receiver (44). The apparatus is operative receive an instruction comprising conditions for implementing the media specific rule, wherein the conditions comprise a first condition specifying a set of one or more media types and a second condition specifying that no media types other than the types in the set are present. The apparatus is further operative, on receipt of a protocol message setting up or modifying a communication, to determine if the protocol message meets the first condition and the second condition and only if both the first condition and the second condition are met, to apply the media specific rule to the communication.

## Claims

1. A method of determining whether to apply a media specific action to communications in an Internet Protocol Multimedia Subsystem enabled network, the method comprising:
at an application server:
receiving (33) an instruction comprising a rule, configured using the Extended Mark-up Language, XML, Configuration Access Protocol,
XCAP, and wherein the rule comprises a media specific action and conditions for implementing the media specific action, wherein the conditions comprise:
a first condition specifying (34) a first set of one or more media
types, the first set being a subset of a second set of media types;
**and**
a second condition specifying (35) that no media types - comprising video - other than the types in the first set - comprising audio - are present;
on receipt of a protocol message setting up or modifying a communication:
determining (36) if the protocol message meets the first condition and the second condition;
and only if both the first condition and the second condition are met:
applying (37) the media specific action to the communication, wherein the media specific action comprises diversion and/or call forwarding instructions.

2. A method as claimed in claim 1, wherein the media specific action is a routing instruction for the communication.

3. A method as claimed in claim 1 or claim 2, wherein the protocol message is for a text based protocol.

4. A method as claimed in claim 3, wherein the protocol message uses the Session Description Protocol.

5. An apparatus (40) for use in at an intermediate node of an Internet Protocol Multimedia Subsystem, IMS, enabled network, the apparatus comprising: processor circuitry (41); a storage unit (42) for storing instructions executable by said processor circuitry, a transmitter (43) and a receiver (44), whereby the apparatus is operative to:
receive an instruction comprising a rule, configured using the Extended
Mark-up Language, XML, Configuration Access Protocol, XCAP, and
wherein the rule comprises a media specific action and conditions for implementing the media specific action, wherein the conditions comprise:
a first condition specifying a first set of one or more media types, the first set being a subset of a second set of media types;
**and**
a second condition specifying that no media types - comprising video - other than the types in the first set - comprising audio - are present;
on receipt of a protocol message setting up or modifying a communication:
determine if the protocol message meets the first condition and the second condition;
and only if both the first condition and the second condition are met:
apply the media specific action to the communication, wherein the media specific action comprises diversion and/or call forwarding instructions.

6. An apparatus as claimed in claim 5, configured to implement a media specific action comprising a routing instruction for the communication.

7. An apparatus as claimed in claim 5 or claim 6, further configured to receive a text based protocol message.

8. An apparatus as claimed in any of claims 5 to 7, further configured to receive a Session Description Protocol based protocol message.

9. An application server comprising an apparatus as claimed in any of claims 5 to 8.

10. A computer program, comprising instructions which, when executed on at least one processor, cause the at least one processor to carry out a method according to any one of claims 1 to 4.

11. A computer program product comprising a computer program as claimed in claim 10.

12. A carrier containing the computer program product of claim 11, wherein the carrier optionally includes an electrical signal, an optical signal, a radio signal, a magnetic tape or disk, an optical disk or a memory stick.

## Patentansprüche

1. Verfahren, um zu bestimmen, ob auf Kommunikationen in einem Internet Protocol Multimedia Subsystem-fähigen Netzwerk eine medienspezifische Aktion angewendet werden soll, wobei das Verfahren umfasst:
an einem Anwendungsserver:
Empfangen (33) einer Anweisung, die eine Regel umfasst, welche unter Verwendung des Extended Mark-up Language, XML, Configuration Access Protocol, XCAP, konfiguriert ist, und wobei die Regel eine medienspezifische Aktion und Bedingungen für das Umsetzen der medienspezifischen Aktion umfasst, wobei die Bedingungen umfassen:
eine erste Bedingung, die eine erste Menge von einem oder mehreren Medientypen spezifiziert (34), wobei es sich bei der ersten Menge um eine Teilmenge einer zweiten Menge von Medientypen handelt;
**und**
eine zweite Bedingung, die spezifiziert (35), dass keine anderen Medientypen - die Video umfassen - als die Typen in der ersten Menge - die Audio umfassen - vorliegen;
bei Empfang einer Protokollnachricht, die eine Kommunikation aufbaut oder modifiziert:
Bestimmen (36), ob die Protokollnachricht die erste Bedingung und die zweite Bedingung erfüllt;
und nur, wenn sowohl die erste Bedingung als auch die zweite Bedingung erfüllt sind:
Anwenden (37) der medienspezifischen Aktion auf die Kommunikation,
wobei die medienspezifische Aktion Umleitungs- und/oder Anrufweiterleitungsanweisungen umfasst.

2. Verfahren nach Anspruch 1, wobei es sich bei der medienspezifischen Aktion um eine Routinganweisung für die Kommunikation handelt.

3. Verfahren nach Anspruch 1 oder Anspruch 2, wobei die Protokollnachricht für ein textbasiertes Protokoll ist.

4. Verfahren nach Anspruch 3, wobei die Protokollnachricht das Session Description Protocol verwendet.

5. Einrichtung (40) zur Verwendung an einem Zwischenknoten eines Internet Protocol Multimedia Subsystem-, IMS, fähigen Netzwerks, wobei die Einrichtung umfasst: Prozessorschaltungen (41); eine Speichereinheit (42) zum Speichern von Anweisungen, die von den Prozessorschaltungen ausgeführt werden können, einen Sender (43) und einen Empfänger (44), wobei die Einrichtung so betrieben werden kann, dass sie:
eine Anweisung empfängt, die eine Regel umfasst, welche unter Verwendung des Extended Mark-up Language, XML, Configuration Access Protokoll, XCAP, konfiguriert ist, und
wobei die Regel eine medienspezifische Aktion und Bedingungen für das Umsetzen der medienspezifischen Aktion umfasst, wobei die Bedingungen umfassen:
eine erste Bedingung, die eine erste Menge von einem oder mehreren Medientypen spezifiziert, wobei es sich bei der ersten Menge um eine Teilmenge einer zweiten Menge von Medientypen handelt;
**und**
eine zweite Bedingung, die spezifiziert, dass keine anderen Medientypen - die Video umfassen - als die Typen in der ersten Menge - die Audio umfassen - vorliegen;
bei Empfang einer Protokollnachricht, die eine Kommunikation aufbaut oder modifiziert:
bestimmt, ob die Protokollnachricht die erste Bedingung und die zweite Bedingung erfüllt;
und nur, wenn sowohl die erste Bedingung als auch die zweite Bedingung erfüllt sind:
die medienspezifische Aktion auf die Kommunikation anwendet, wobei die medienspezifische Aktion Umleitungs- und/oder Anrufweiterleitungsanweisungen umfasst.

6. Einrichtung nach Anspruch 5, die so konfiguriert ist, dass sie eine medienspezifische Aktion umsetzt, die eine Routinganweisung für die Kommunikation umfasst.

7. Einrichtung nach Anspruch 5 oder Anspruch 6, die weiter so konfiguriert ist, dass sie eine textbasierte Protokollnachricht empfängt.

8. Einrichtung nach einem der Ansprüche 5 bis 7, die weiter so konfiguriert ist, dass sie eine Session Description Protocol-basierte Protokollnachricht empfängt.

9. Anwendungsserver, der eine Einrichtung nach einem der Ansprüche 5 bis 8 umfasst.

10. Computerprogramm, das Anweisungen umfasst, die, wenn sie auf mindestens einem Prozessor ausgeführt werden, den mindestens einen Prozessor dazu bringen, ein Verfahren nach einem der Ansprüche 1 bis 4 auszuführen.

11. Computerprogrammprodukt, das ein Computerprogramm nach Anspruch 10 umfasst.

12. Träger, der das Computerprogrammprodukt nach Anspruch 11 enthält, wobei der Träger gegebenenfalls ein elektrisches Signal, ein optisches Signal, ein Funksignal, ein Magnetband oder eine Magnetplatte, eine optische Platte oder einen Speicherstick einschließt.

## Revendications

1. Procédé de détermination d'application ou non d'une action spécifique de contenu multimédia à des communications dans un réseau prenant en charge un sous-système multimédia à protocole Internet, le procédé comprenant :
sur un serveur d'application les étapes consistant à :
recevoir (33) une instruction comprenant une règle, configurée à l'aide du protocole d'accès à une configuration, XCAP, de langage de balisage extensible, XML, et dans lequel la règle comprend une action spécifique de contenu multimédia et des conditions de mise en œuvre de l'action spécifique de contenu multimédia, dans lequel les conditions comprennent :
une première condition spécifiant (34) un premier ensemble d'un ou plusieurs types de contenus multimédia, le premier ensemble étant un sous-ensemble d'un second ensemble de types de contenus multimédia ;
et
une seconde condition spécifiant (35) qu'aucun type de contenu multimédia - comprenant de la vidéo - autre que les types du premier ensemble - comprenant de l'audio - n'est présent ;
à réception d'un message de protocole établissant ou modifiant une communication :
déterminer (36) si le message de protocole satisfait la première condition et la seconde condition ;
et seulement si la première condition et la seconde condition sont satisfaites :
appliquer (37) l'action spécifique de contenu multimédia à la communication,
dans lequel l'action spécifique de contenu multimédia comprend des instructions de déviation et/ou de renvoi d'appel.

2. Procédé selon la revendication 1, dans lequel l'action spécifique de contenu multimédia est une instruction de routage pour la communication.

3. Procédé selon la revendication 1 ou la revendication 2, dans lequel le message de protocole est destiné à un protocole basé sur du texte.

4. Procédé selon la revendication 3, dans lequel le message de protocole utilise le protocole de description de session.

5. Appareil (40) destiné à être utilisé dans un nœud intermédiaire d'un réseau activé de sous-système multimédia à protocole Internet, IMS, l'appareil comprenant: des circuits de processeur (41) ; une unité de stockage (42) pour stocker des instructions exécutables par lesdits circuits de processeur, un émetteur (43) et un récepteur (44), moyennant quoi l'appareil fonctionne pour :
recevoir une instruction comprenant une règle, configurée à l'aide du protocole d'accès à une configuration, XCAP, de langage de balisage extensible, XML, et
dans lequel la règle comprend une action spécifique de contenu multimédia et des conditions de mise en œuvre de l'action spécifique de contenu multimédia, dans lequel les conditions comprennent :
une première condition spécifiant un premier ensemble d'un ou plusieurs types de contenus multimédia, le premier ensemble étant un sous-ensemble d'un second ensemble de types de contenus multimédia ; et
une seconde condition spécifiant qu'aucun type de contenu multimédia - comprenant de la vidéo - autre que les types du premier ensemble - comprenant de l'audio - n'est présent ;
à réception d'un message de protocole établissant ou modifiant une communication :
déterminer si le message de protocole respecte la première condition et la seconde condition ;
et seulement si la première condition et la seconde condition sont satisfaites :
appliquer l'action spécifique de contenu multimédia à la communication, dans lequel
l'action spécifique de contenu multimédia comprend des instructions de déviation et/ou de renvoi d'appel.

6. Appareil selon la revendication 5, configuré pour mettre en œuvre une action spécifique de contenu multimédia comprenant une instruction de routage pour la communication.

7. Appareil selon la revendication 5 ou la revendication 6, configuré en outre pour recevoir un message de protocole basé sur du texte.

8. Appareil selon l'une quelconque des revendications 5 à 7, configuré en outre pour recevoir un message de protocole basé sur le protocole de description de session.

9. Serveur d'application comprenant un appareil selon l'une quelconque des revendications 5 à 8.

10. Programme informatique, comprenant des instructions qui, lorsqu'elles sont exécutées sur au moins un processeur, amènent le au moins un processeur à exécuter un procédé selon l'une quelconque des revendications 1 à 4.

11. Produit de programme informatique comprenant un programme informatique selon la revendication 10.

12. Support contenant le produit de programme informatique selon la revendication 11, dans lequel le support inclut facultativement un signal électrique, un signal optique, un signal radio, une bande ou un disque magnétique, un disque optique ou une clé USB.
